# EUROPÄISCHE PATENTSCHRIFT

(11) **EP 0 512 307 B1**
(45) Veröffentlichungstag und Bekanntmachung des Hinweises auf die Patenterteilung: **14.09.1994**
(21) Anmeldenummer: 92106745.0
(22) Anmeldetag: 21.04.1992
(51) Int. Cl.: F01P 7/16, F02B 29/04

(54) **Kühlsystem für eine aufgeladene Brennkraftmaschine**
Cooling system for a supercharged internal combustion engine
Système de refroidissement pour un moteur à combustion interne suralimenté

(30) Priorität: 06.05.1991 DE 4114704
(43) Veröffentlichungstag der Anmeldung: 11.11.1992
(73) Patentinhaber: MTU MOTOREN- UND TURBINEN-UNION FRIEDRICHSHAFEN GMBH, D-88040 Friedrichshafen (DE)
(72) Erfinder: Edmaier, Franz, W-7990 Friedrichshafen (DE); Kiefer, Günther, W-7778 Markdorf (DE)

(56) Entgegenhaltungen:
- DE-B- 1 576 718
- FR-A- 1 363 148
- FR-A- 1 487 401
- GB-A- 2 057 564

## Beschreibung

Die Erfindung betrifft ein Kühlsystem für eine aufgeladene Brennkraftmaschine zur zweistufigen Abkühlung der von einem Abgasturbolader komprimierten Ladeluft nach dem Oberbegriff von Anspruch 1, wie sie beispielsweise aus der DE-B-15 76 718 als bekannt hervorgeht.

Zur Abkühlung der Ladeluft in zwei Stufen dienen nach der DE-B-15 76 718 zwei Ladeluftkühler, die von Kühlmittel unterschiedlichen Temperaturniveaus durchströmt werden. Die beiden Ladeluftkühler sind zwei separaten Kühlmittelkreisläufen, einem Hochtemperaturkreislauf und einem Niedertemperaturkreislauf, zugeordnet. Der Hochtemperaturkreislauf besteht aus einem Hauptzweig mit der Brennkraftmaschine und einem Hochtemperaturrückkühler. Der Ladeluftkühler, der die Ladeluft in einer ersten Stufe kühlt, liegt in einem Nebenzweig des Hochtemperaturkreislaufs. Das im Nebenzweig benötigte Kühlmittel wird aus dem die Brennkraftmaschine verlassenden Kühlmittelstrom entnommen und zum Ladeluftkühler im Nebenzweig geführt. Das aus dem Ladeluftkühler abstromende Kühlmittel wird zu dem den Hochtemperaturrückkühler verlassenden Kühlmittelstrom zugemischt, der zum Kühlmitteleintritt der Brennkraftmaschine führt. Der Niedertemperaturkreislauf enthält einen Niedertemperaturrückkühler und dazu in Reihe geschaltet den Ladeluftkühler zum Abkühlen der Ladeluft in einer zweiten Stufe. Die Kühlung des Motorschmieröls erfolgt durch einen warmetauscher, der ebenfalls im Niedertemperaturkreislauf angeordnet ist. Durch das Kühlsystem mit einem Hochtemperatur- und einem Niedertemperaturkreislauf soll eine intensive Abkühlung der Ladeluft ermöglicht werden, um die Leistung der Brennkraftmaschine zu steigern. Nachteilig am aufgezeigten Kühlsystem ist, daS die zum Nebenzweig geführte Kühlmittelmenge von dem die Brennkraftmaschine verlassenden Kühlmittelstrom abgezweigt wird, der ein relativ hohes Temperaturniveau besitzt. Wegen des hohen Temperaturniveaus des Kühlmittels ist die Abkühlung der Ladeluft in der ersten Stufe entsprechend beschränkt. Ferner ist die im Hochtemperaturkreislauf im Umlauf befindliche Gesamtkühlmittelmenge groß, weil nur ein Teil davon durch den Hochtemperaturrückkühler strömt.

In der GB-A-20 57 564 ist ein weiteres Kühlsystem mit einem Hochtemperatur- und einem Niedertemperaturkreislauf zur zweistufigen Kühlung der Ladeluft in zwei Ladeluftkühlern dargestellt. Das Kühlsystem unterscheidet sich von dem vorstehend beschriebenen lediglich darin, daS das im Nebenzweig des Hochtemperaturkreislaufs aus dem Ladeluftkühler abströmende Kühlmittel dem die Brennkraftmaschine verlassenden Kühlmittelstrom zugemischt wird, der zum Kühlmitteleintritt des Hochtemperaturrückkühlers führt. Das im Nebenzweig benötigte Kühlmittel wird von dem den Hochtemperaturrückkühler verlassenden Kühlmittelstrom abgezweigt. Auch hier ist nachteilig, daß die benötigte Gesamtkühlmittelmenge groß ist, weil nur ein Teil des umlaufenden Kühlmittels zur Kühlung der Brennkraftmaschine verwendet wird. Wegen des relativ niedrigen Temperaturniveaus der vor dem Kühlmitteleintritt des Hochtemperaturrückkühlers vermischten Kühlmittelströme wird die mögliche Kühlerleistung nicht optimal genutzt. Dementsprechend ist das Bauvolumen des Kühlers groß.

In einer Variante des Kühlsystems nach der GB-A-20 57 564 wird auch der den Ladeluftkühler des Niedertemperaturkreislaufs verlassende Kühlmittelstrom zu dem zum Hochtemperaturrückkühler geleiteten Kühlmittelstrom zugemischt. Das im Niedertemperaturkreislauf benötigte Kühlmittel wird wie das für den Nebenzweig des Hochtemperaturkreislaufs benötigte Kühlmittel von dem den Kochtemperaturrückkühler verlassenden Kühlmittelstrom abgezweigt und dann über den Niedertemperaturrückkühler geführt, bevor es in den Niedertemperaturladeluftkühler eintritt. Dabei wird nur eine Kühlmittelpumpe benötigt. Nachteilig ist auch hier der wegen der Vermischung der Kühlmittelströme hinter der Brennkraftmaschine recht hohe Gesamtkühlmittelbedarf und die nicht optimal genutzte Leistungsfähigkeit des Hochtemperaturrückkühlers. Aufgrund der Reihenschaltung von Hochtemperaturrückkühler und Niedertemperaturrückkühler ergibt sich ein hoher Strömungswiderstand, so daS eine Pumpe mit hoher Leistungsaufnahme benötigt wird. Auch ist eine komplizierte Leitungsführung notwendig.

Der Erfindung liegt die Aufgabe zugrunde, ein Kühlsystem für eine aufgeladene Brennkraftmaschine aufzuzeigen, das hinsichtlich der Leitungsführung einfach ist, eine geringe Gesamtkühlmittelmenge erfordert und das die Leistungsfähigkeit der Rückkühler optimal nutzt.

Diese Aufgabe wird bei einer gattungsgemäßen Einrichtung durch die kennzeichnenden Merkmale des Anspruchs 1 gelöst. Nach Anspruch 1 wird die im Nebenzweig vom Hochtemperaturladeluftkühler abströmende Kühlmittelmenge zu der im Hauptkreis vom Hochtemperaturrückkühler zur Brennkraftmaschine strömenden Kühlmittelmenge zugemischt. Das im Nebenzweig benötigte Kühlmittel wird zwischen dem Kühlmitteleintritt zur Brennkraftmaschine und der Stelle des Hauptzweigs abgezweigt, an der die vom Nebenzweig und dem Hochtemperaturrückkühler abströmenden Kühlmittelströme vermischt sind. Am Wärmeaustausch in der Brennkraftmaschine und im Hochtemperaturrückkühler ist die größtmögliche Kühlmittelmenge beteiligt, so daß die benötigte Gesamtkühlmittelmenge klein gehalten werden kann. Wegen des hohen Temperaturniveaus des in den Hochtemperaturrückkühler eintretenden Kühlmittels ist der Gesamtaustauschgrad des Hochtemperaturrückkühlers hoch und somit optimal. Die Ausführung des Kühlsystems ist besonders hinsichtlich der Leitungsführung einfach, da im Hochtemperaturkreis keine Leitung von der Brennkraftmaschine zum Hochtemperaturladeluftkühler führen muß. Beim Kühlsystem nach Anspruch 2 vermischen sich die Kühlmittelströme des Hochtemperatur- und Niedertemperaturkreislaufes, und zwar wird der den Niedertemperaturladeluftkühler und eventuell nachgeschaltete Wärmetauscher für Motoröl und Getriebeöl verlassende Kühlmittelstrom dem Gemisch der Kühlmittelströme des Hochtemperaturkreislaufs zugemischt. Diesem Mischstrom wird die im Nebenzweig des Hochtemperaturkreislaufs benötigte Kühlmittelmenge und die zum Kühlmitteleintritt des Niedertemperaturrückkühlers geführte Kühlmittelmenge entnommen. Vorteilhaft ist, daß sich eine weiter vereinfachte Leitungsführung ergibt und ferner nur eine Kühlmittelpumpe benötigt wird. Ferner läßt sich der Wirkungsgrad des Niedertemperaturrückkühlers erhöhen. Nach den Unteransprüchen ist es ferner zweckmäßig, die Wärmetauscher für Motoröl und Getriebeöl im Niedertemperaturkreislauf anzuordnen. Bei der Wahl der ölsorte muß dabei keine Rücksicht auf das Temperaturniveau des Hochtemperaturkreislaufs genommen werden. Für eine schnelle, lastabhängige Regelung des Kühlmittelflusses durch den Niedertemperaturladeluftkühler ist ein Regelorgan mit Umgehungsleitung vorgesehen, um bei schnellen Laständerungen entsprechende Ladelufttemperaturen erzielen zu können. Die Beeinflussung des Regelorgans ist möglich durch den Regelstangenweg, die Laderdrehzahl, den Ladeluftdruck oder die Temperatur des den Kochtemperaturrückkühler verlassenden Kühlmittels.

Ausführungsbeispiele der Erfindung sind in den Zeichnungen dargestellt und werden im folgenden näher beschrieben; es zeigen:
- Fig. 1: ein Kühlsystem mit einem Hochtemperatur- und einem Niedertemperaturkreislauf, wobei das im Hochtemperaturladeluftkühler benötigte Kühlmittel aus einem Kühlmittelstrom entnommen wird, in dem die den Hochtemperaturrückkühler und den Hochtemperaturladeluftkühler verlassenden Kühlmittelströme vermischt sind;
- Fig. 2: ein Fig. 1 entsprechendes Kühlsystem, wobei dem Mischstrom außerdem der den Niedertemperaturladeluftkühler verlassende Kühlmittelstrom zugemischt wird.

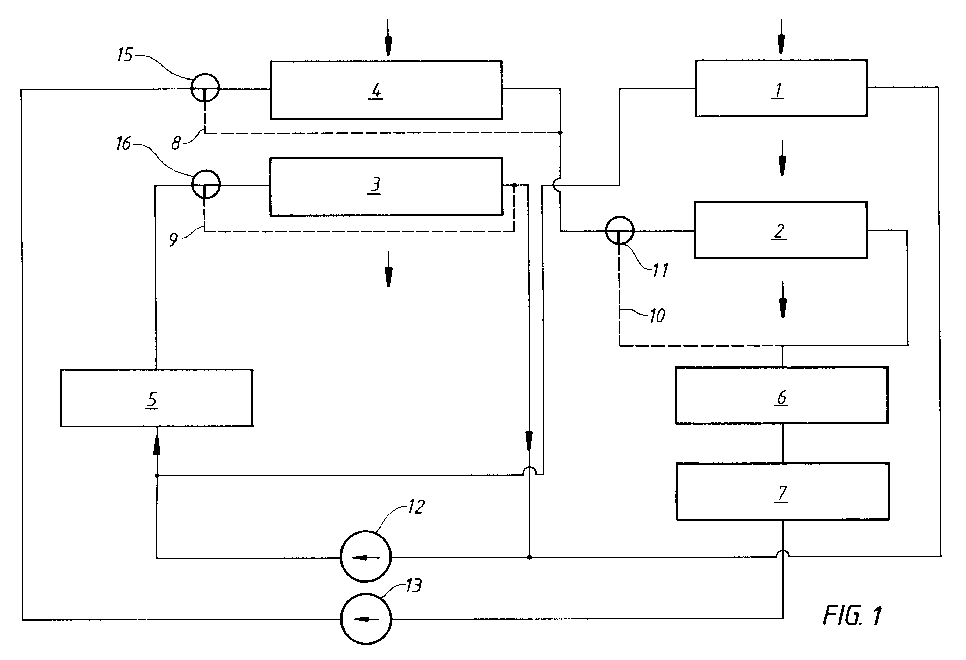

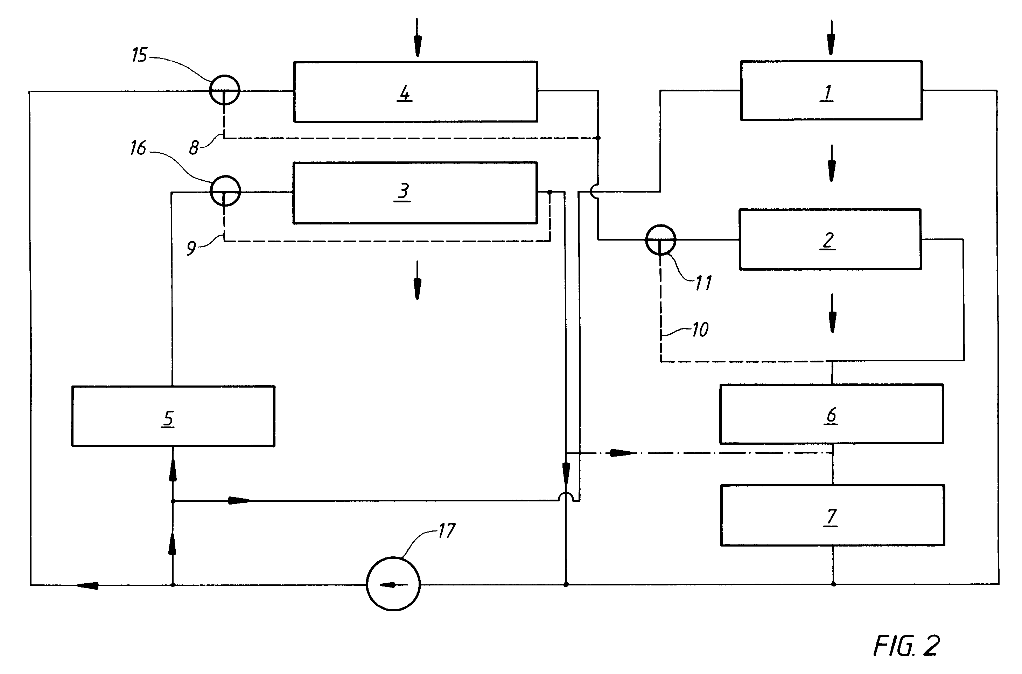

Bei den in den Fig. 1 und 2 dargestellten Kühlkreisen für eine aufgeladene Brennkraftmaschine 5 wird die in einem Abgasturbolader verdichtete Ladeluft in zwei Stufen abgekühlt. Hierfür dient ein Hochtemperaturladeluftkühler 1, der in einem Nebenzweig eines Hochtemperaturkreislaufs liegt. Der Nebenzweig wird mit Kühlmittel aus einem Hauptzweig des Hochtemperaturkreislaufs gespeist, in dem die Brennkraftmaschine 5 und ein dazu in Reihe geschalteter Hochtemperaturrückkühler 3 liegt. Der zur Abkühlung in einer zweiten Stufe dienende Niedertemperaturladeluftkühler 2 ist in Reihe mit einem Niedertemperaturrückkühler 4 geschaltet. Das Temperaturniveau des zum Niedertemperaturladeluftkühler 2 strömenden Kühlmittels liegt niedriger als das Temperaturniveau des zum Kochtemperaturladeluftkühler 1 strömenden Kühlmittels. Dem Niedertemperaturladeluftkühler 2 ist ein Wärmetauscher 6 für das Motoröl sowie ein Wärmetauscher 7 für das Getriebeöl nachgeschaltet. Dem Niedertemperaturrückkühler 4 und dem Hochtemperaturrückkühler 3 sind jeweils regelbare Umgehungsleitungen 8 und 9 mit auf die Kühlmitteltemperatur ansprechenden Regelventilen 15 und 16 zugeordnet. Zur schnellen, lastabhängigen Regelung des Kühlmittelflusses durch den Niedertemperaturladeluftkühler 2 hindurch ist ein Regelorgan 11 vorgesehen, das den Durchfluß über den Niedertemperaturladeluftkühler 2 und eine Umgehungsleitung 10 regelt. Die Regelung des Regelorgans 11 in Abhängigkeit vom Regelstangenweg, der Laderdrehzahl, dem Ladedruck oder der Temperatur des vom Hochtemperaturrückkühler 3 abfließenden Kühlmittels ermöglicht es, bei schnellen Laständerungen der Brennkraftmaschine die Ladelufttemperaturen entsprechend schnell zu beeinflussen.

Beim Kühlsystem nach Fig. 1 werden zwei Kühlmittelpumpen 12 und 13 benötigt. Das gesamte, den Hochtemperaturrückkühler 3 verlassende Kühlmittel wird mit dem vom Hochtemperaturladeluftkühler 1 rückströmenden Kühlmittel vermischt und vor dem Eintritt in die Brennkraftmaschine aus diesem Mischstrom das im Nebenkreis benötigte, dem Hochtemperaturladeluftkühler 1 zuströmende Kühlmittel entnommen. Das die Brennkraftmaschine 5 verlassende Kühlmittel wird dem Hochtemperaturrückkühler 3 zugeführt. Bei dem dargestellten Ausführungsbeispiel ist vorteilhaft, daß die benötigte Kühlmittelmenge gering gehalten wird, weil am Wärmetausch in der Brennkraftmaschine und im Hochtemperaturrückkühler die größtmögliche Kühlmittelmenge beteiligt ist. Dadurch wird der höchstmögliche Wärmeaustauschgrad erzielt und die Leistungsfähigkeit des Hochtemperaturrückkühlers 3 optimal genutzt. Beim Kühlsystem nach Fig. 1 ist insbesondere die Leitungsführung einfach. Es wird keine Leitung des Hochtemperaturkreislaufs von der Brennkraftmaschine 5 zum Hochtemperaturladeluftkühler 1 benötigt.

Beim Kühlsystem nach Fig. 2 ist nur noch eine Kühlmittelpumpe 17 erforderlich. Die Kühlmittelströme des Hochtemperatur- und des Niedertemperaturkreislaufs werden vermischt. Die vom Niedertemperaturladeluftkühler 2 des Niedertemperaturkreislaufs und vom Hochtemperaturladeluftkühler 1 und vom Hochtemperaturrückkühler 3 abfließenden Kühlmittelströme werden in eine gemeinsame Leitung geführt und vermischt. Von diesem Mischstrom werden Teilströme abgezweigt, die zum Kühlmitteleintritt des Niedertemperaturrückkühlers 4, zum Eintritt des Hochtemperaturladeluftkühlers 1 und zum Kühlmitteleintritt der Brennkraftmaschine 5 gelangen. Bei Bedarf kann, wie durch eine strichpunktierte Linie angedeutet, die den Hochtemperturrückkühler 3 verlassende Kühlmittelmenge dem vom Niedertemperaturladeluftkühler 2 herkommenden Strom vor dem Eintritt in den Wärmetauscher 7 für das Getriebeöl zugemischt werden, so daß große Wärmemengen abgeführt werden können, die beispielsweise bei einem Fahrzeuggetriebe mit einem hydraulischen Bremsretarder anfallen können. Durch die Mischung der Kühlmittelströme aus Hochtemperatur- und Niedertemperaturkreislauf wird die Leitungsführung weiter vereinfacht, wobei aber die Vorteile des in Fig. 1 aufgezeigten Kühlkreislaufs im wesentlichen erhalten bleiben.

Mit den aufgezeigten Kühlsystemen wird durch Entkoppelung von Hoch- und Niedertemperaturkreislauf eine Steigerung der Kühlmitteltemperatur in einem Teil des Kühlsystems ermöglicht und damit die wirksame Temperaturdifferenz zwischen dem Kühlmedium Umgebungsluft und dem Kühlmittel erhöht, so daß letztendlich die Kühlerfläche und/oder der Kühlluftbedarf abgesenkt werden kann. Wesentlich ist dabei, daß durch die zweistufige Ladeluftkühlung der größte Teil dieses Wärmestroms im Hochtemperaturkreislauf abgeführt wird, was die Effizienz des Kühlsystems erhöht. Die Abkühlung der Ladeluft in einer ersten und zweiten Stufe erlaubt also eine tiefere Abkühlung der Ladeluft bei vergleichbaren Gütewerten der Komponenten verschiedener Kühlnetze. Das Temperaturniveau im Hochtemperaturkreislauf hat keinen Einfluß auf das Temperaturniveau im Niedertemperaturkreislauf. Bei Abordnung des Wärmetauschers für das Motoröl im Niedertemperaturkreislauf ist eine ausreichende Kühlung des Motoröls auch bei Heißkühlung gewährleistet. Bei Niedriglastbetrieb der Brennkraftmaschine wird durch den Hochtemperaturladeluftkühler eine Aufheizung der Ladeluft zur Verbesserung des Verbrennungsablaufs und Vermindung der Abgasemission und der Weißrauchgefahr erzielt.

## Patentansprüche

1. Kühlsystem für eine aufgeladene Brennkraftmaschine (5), mit einem Hochtemperaturkreislauf, der in einem Hauptzweig die Brennkraftmaschine (5) und einen Hochtemperaturrückkühler (3), sowie einem Nebenzweig einen Hochtemperaturladeluftkühler (1) umfaßt, wobei das für den Nebenzweig benötigte Kühlmittel aus dem Hauptzweig entnommen wird und nach Durchströmen des Hochtemperaturladeluftkühlers (1) einem vom Hochtemperaturrückkühler (3) abströmenden Kühlmittelstrom zugemischt wird, der zum Kühlmitteleintritt der Brennkraftmaschine (5) führt, ferner mit einem Niedertemperaturkreislauf mit einem Niedertemperaturrückkühler (4) und einem dazu in Reihe geschalteten Niedertemperaturladeluftkühler (2), der von der aus dem Hochtemperaturladeluftkühler (1) austretenden Ladeluft zu deren weiteren Abkühlung durchströmt wird, bevor die Ladeluft den Zylindern der Brennkraftmaschine (5) zugeführt wird, ferner mit mindestens einer Kühlmittelpumpe (12, 13) zum Umwälzen des Kühlmittels, dadurch gekennzeichnet, daß das im Nebenzweig benötigte Kühlmittel aus einem Kühlmittelstrom an einer Stelle des Hauptzweigs abgezweigt wird, die zwischen der Stelle, an der das aus dem Nebenzweig vom Hochtemperaturladeluftkühler (1) abströmende Kühlmittel mit dem gesamten, den Hochtemperaturrückkühler verlassenden Kühlmittel vermischt wird, und dem Kühlmitteleintritt der Brennkraftmaschine (5) liegt, und daß das gesamte durch die Brennkraftmaschine (5) strömende Kühlmittel anschließend dem Hochtemperaturrückkühler (3) zuströmt.

2. Kühlsystem nach Anspruch 1, dadurch gekennzeichnet, daß das im Niedertemperaturkreislauf umlaufende Kühlmittel nach Verlassen des Niedertemperaturladeluftkühlers (2) und eventuell nachgeschalteter weiterer Wärmetauscher (6, 7) mit den den Hochtemperaturrückkühler (3) und den Hochtemperaturladeluftkühler (1) verlassenden Kühlmittelströmen des Hochtemperaturkreislaufs vermischt wird, und diesem Mischstrom die zum Niedertemperaturrückkühler (4) und zum Hochtemperaturladeluftkühler (1) und zur Brennkraftmaschine (5) geleiteten Kühlmittelströme entnommen werden.

3. Kühlsystem nach Anspruch 1 oder 2, dadurch gekennzeichnet, daß im Niedertemperaturkreislauf dem Niedertemperaturladeluftkühler (2) ein Wärmetauscher (6) für das Motoröl der Brennkraftmaschine (5) nachgeschaltet ist.

4. Kühlsystem nach einem der Ansprüche 1 bis 3, dadurch gekennzeichnet, daß im Niedertemperaturkreislauf dem Niedertemperaturladeluftkühler (2) ein Wärmetauscher (7) für das Getriebeöl der Brennkraftmaschine (5) nachgeschaltet ist.

5. Kühlsystem nach einem der Ansprüche 2 bis 4, dadurch gekennzeichnet, daß das den Hochtemperaturrückkühler (3) verlassende Kühlmittel dem Kühlmittelstrom des Niedertemperaturkreislaufs vor dem Eintritt in den Wärmetauscher (7) für das Getriebeöl der Brennkraftmaschine (5) zugemischt wird.

6. Kühlsystem nach einem der Ansprüche 1 bis 5, dadurch gekennzeichnet, daß dem Niedertemperaturladeluftkühler (2) ein in Abhängigkeit von Betriebszuständen der Brennkraftmaschine (5) steuerbares Regelorgan (11) mit einer Umgehungsleitung (10) zugeordnet ist.

7. Kühlsystem nach Anspruch 6, dadurch gekennzeichnet, daß das Regelorgan (11) in Abhängigkeit von der Regelstangenstellung gesteuert wird, die ein Maß für die jeweils eingespritzte Kraftstoffmenge darstellt.

8. Kühlsystem nach Anspruch 6, dadurch gekennzeichnet, daß die Steuerung des Regelorgans (11) abhängig von der Laderdrehzahl erfolgt.

9. Kühlsystem nach Anspruch 6, dadurch gekennzeichnet, daß die Steuerung des Regelorgans (11) in Abhängigkeit vom Ladeluftdruck erfolgt.

10. Kühlsystem nach Anspruch 6, dadurch gekennzeichnet, daß die Steuerung des Regelorgans (11) in Abhängigkeit von der Temperatur des vom Hochtemperaturrückkühler (3) abströmenden Kühlmittels erfolgt.

## Claims

1. A cooling system for a forced-induction internal-combustion engine (5) with a high-temperature circuit which in a main branch comprises the internal-combustion engine (5) and a high-temperature recooler (3), and in a secondary branch comprises a high-temperature air-charge cooler (1), wherein the coolant required for the secondary branch is taken from the main branch and after flowing through the high-temperature air-charge cooler (1) is mixed with a flow of coolant which flows from the high-temperature recooler (3) and which is directed to the coolant inlet of the internal-combustion engine (5), and also with a low-temperature circuit having a low-temperature recooler (4) and a low-temperature air-charge cooler (2) which is connected in series therewith and through which the air charge leaving the high-temperature air-charge cooler (1) flows for the further cooling thereof, before the air charge is fed to the cylinders of the internal-combustion engine (5), and also with at least one coolant pump (12, 13) for circulating the coolant, characterised in that the coolant required in the secondary branch is branched off from a coolant flow at a position of the main branch which lies between a position at which the coolant flowing from the secondary branch of the high-temperature air-charge cooler (1) is mixed with the entirety of the coolant leaving the high-temperature recooler, and the coolant inlet of the internal-combustion engine (5), and in that the entirety of the coolant flowing through the internal-combustion engine (5) subsequently flows to the high-temperature recooler (3).

2. A cooling system according to Claim 1, characterised in that the coolant circulating in the low-temperature circuit, after leaving the low-temperature air-charge cooler (2) and any other heat exchangers (6, 7) connected downstream thereof, is mixed with the coolant flows of the high-temperature circuit leaving the high-temperature recooler (3) and the high-temperature air-charge cooler (1), and the coolant flows directed to the low-temperature recooler (4) and to the high-temperature air-charge cooler (1) and to the internal-combustion engine (5) are taken from this mixed flow.

3. A cooling system according to Claim 1 or 2, characterised in that in the low-temperature circuit a heat exchanger (6) for the engine oil of the internal-combustion engine (5) is connected downstream of the low-temperature air-charge cooler (2).

4. A cooling system according to any one of Claims 1 to 3, characterised in that in the low-temperature circuit a heat exchanger (7) for the transmission oil of the internal-combustion engine (5) is connected downstream of the low-temperature air-charge cooler (2).

5. A cooling system according to any one of Claims 2 to 4, characterised in that the coolant leaving the high-temperature recooler (3) is mixed with the coolant flow of the low-temperature circuit before entering the heat exchanger (7) for the transmission oil of the internal-combustion engine (5).

6. A cooling system according to any one of Claims 1 to 5, characterised in that a control member (11) with a bypass line (10), which can be controlled as a function of the operation conditions of the internal-combustion engine (5), is associated with the low-temperature air-charge cooler (2).

7. A cooling system according to Claim 6, characterised in that the control member (11) is controlled as a function of the control rod setting which represents an indication of the amount of fuel injected in each case.

8. A cooling system according to Claim 6, characterised in that the control of the control member (11) is effected as a function of the speed of rotation of the forced-induction charger.

9. A cooling system according to Claim 6, characterised in that the control of the control rod (11) is effected as a function of the air-charge pressure.

10. A cooling system according to Claim 6, characterised in that the control of the control rod (11) is effected as a function of the temperature of the coolant flowing from the high-temperature recooler (3).

## Revendications

1. Système de refroidissement pour un moteur à combustion interne suralimenté (5), comprenant un circuit haute température contenant, dans une branche principale, le moteur à combustion interne (5) et un réfrigérant de retour haute température (3), ainsi que, dans une branche secondaire, un refroidisseur d'air d'alimentation haute température (1), système dans lequel le fluide de refroidissement nécessaire pour la branche secondaire est prélevé de la branche principale et, après passage à travers le refroidisseur d'air haute température (1), est ajouté en mélange à un courant de fluide de refroidissement sortant du réfrigérant de retour haute température (3) et se dirigeant vers l'entrée de fluide de refroidissement du moteur à combustion interne (5), et comprenant en outre un circuit basse température avec un réfrigérant de retour basse température (4) et, monté en série avec lui; un refroidisseur d'air de suralimentation basse température (2) qui est parcouru par l'air de suralimentation sortant du refroidisseur d'air haute température (1), en vue du refroidissement supplémentaire de cet air avant qu'il ne soit envoyé aux cylindres du moteur à combustion interne (5), ainsi qu'au moins une pompe à fluide de refroidissement (12, 13) pour la circulation du fluide de refroidissement, système caractérisé en ce que le fluide de refroidissement nécessaire dans la branche secondaire est dérivé d'un courant de fluide de refroidissement à un endroit de la branche principale situé entre d'une part le point où le fluide de refroidissement sortant de la branche secondaire et venant du refroidisseur d'air haute température (1) est mélangé avec la totalité du fluide de refroidissement quittant le réfrigérant de retour haute température, et d'autre part l'entrée de fluide de refroidissement du moteur à combustion interne (5), et que la totalité du fluide de refroidissement passant par le moteur à combustion interne (5), s'écoute ensuite vers le réfrigérant de retour haute température (3).

2. Système de refroidissement selon la revendication 1, caractérisé en ce que le fluide de refroidissement circulant dans le circuit basse température, après avoir quitté le refroidisseur d'air de suralimentation basse température (2) et d'éventuels autres échangeurs de chaleur (6, 7) montés à la suite, est mélangé avec les courants de fluide de refroidissement du circuit haute température quittant le réfrigérant de retour haute température (3) et le refroidisseur d'air haute température (1) et, de ce courant mixte, sont prélevés les courants de fluide de refroidissement dirigés vers le réfrigérant de retour basse température (4), vers le refroidisseur d'air haute température (1) et vers le moteur à combustion interne (5).

3. Système de refroidissement selon la revendication 1 ou 2, caractérisé en ce que le refroidisseur d'air de suralimentation basse température (2) est suivi, dans le circuit basse température, d'un échangeur de chaleur (6) pour l'huile moteur du moteur à combustion interne (5).

4. Système de refroidissement selon une des revendications 1 à 3, caractérisé en ce que le refroidisseur d'air de suralimentation basse température (2) est suivi, dans le circuit basse température, d'un échangeur de chaleur (7) pour l'huile de transmission du moteur à combustion interne (5).

5. Système de refroidissement selon une des revendications 2 à 4, caractérisé en ce que fluide de refroidissement quittant le réfrigérant de retour haute température (3) est ajouté en mélange au courant de fluide de refroidissement du circuit basse température avant l'entrée dans l'échangeur de chaleur (7) pour l'huile de transmission du moteur à combustion interne (5).

6. Système de refroidissement selon une des revendications 1 à 5, caractérisé en ce qu'un organe de réglage (11), pouvant être commandé en fonction de régimes du moteur à combustion interne (5), ainsi qu'une canalisation de dérivation (10), sont coordonnés au refroidisseur d'air de suralimentation basse température (2).

7. Système de refroidissement selon la revendication 6, caractérisé en ce que l'organe de réglage (11) est commandé en fonction de la position de la tige de réglage, laquelle représente une mesure de la quantité de carburant injectée à chaque fois.

8. Système de refroidissement selon la revendication 6, caractérisé en ce que la commande de l'organe de réglage (11) s'effectue en fonction de la vitesse de rotation du suralimenteur.

9. Système de refroidissement selon la revendication 6, caractérisé en ce que la commande de l'organe de réglage (11) s'effectue en fonction de la pression d'air de suralimentation.

10. Système de refroidissement selon la revendication 6, caractérisé en ce que la commande de l'organe de réglage (11) s'effectue en fonction de la température du fluide de refroidissement sortant du réfrigérant de retour haute température (3).
